# EUROPEAN PATENT APPLICATION

(11) **EP 0 696 127 A1**
(43) Date of publication of application: **07.02.1996**
(21) Application number: 95304306.4
(22) Date of filing: 20.06.1995
(51) Int. Cl.: H04M 11/06

(54) **Full motion video messaging**

(30) Priority: 30.06.1994 US 268604
(71) Applicant: AT&T Corp., New York, NY 10013-2412 (US)
(72) Inventor: Majeti, Venkata Chalapathi, Naperville, Illinois 60565-3178 (US)
(74) Representative: Buckley, Christopher Simon Thirsk

(57) **Abstract**

An asynchronous video messaging system provides delivery by conventional telecommunications channels (16) of video messages for storage and subsequent viewing. In one embodiment of the invention, the video messaging system contains an analog/digital video signal converter (32), a video format converter (33), and a microprocessor (40) having memory (42) on which a telecommunications software application resides and which controls a modem (34) connected to the telecommunications network (16). Video messages are converted from analog to digital form, stored in memory (42), and an identification header is associated with it. The digital form of the video message is transmitted across the telecommunications network (16) at a rate compatible with the channel transmission rate. On receipt from the telecommunications network, the message is stored along with its identifying information for subsequent viewing.

## Description

### Field of The Invention

This invention relates to video messaging in other than real time utilizing low bandwidth signal transmission.

### Background of the Invention

Electronic mail messaging is an integral part of today's business world, demonstrating that messaging need not be in real time to be meaningful and valuable to the participants. There has been considerable effort at developing teleconferencing capability in which participants at one location can view and interact with participants at other locations in real time. Often, however, there is a desire to receive a visual image, but not an equal need to receive it contemporaneous with transmission.

This is also true among private consumers. The success of video cameras demonstrates that consumers have an interest in receiving visual full motion images rather than a static image as part of a message. An example of this is a videotape of a newborn sent by proud parents to equally proud grandparents. Capturing images on magnetic media and allowing them to be replayed on a television is readily possible with video cameras and video cassette recorders (VCR) and has substantially supplanted the "home movie" camera. VCR image storage is by magnetic encoding, typically on magnetic tape cassettes (VCR Tapes). Once stored, however, the VCR tapes must be transported to the location of the viewer and played on the viewer's television/VCR combination. Further, the communications protocols, or signal format, to which VCR componentry is produced differs around the world. Consequently, a VCR tape must be translated to make it compatible with the system of the intended foreign viewer which is both expensive and time consuming. Further, while instant viewing may not be demanded, there is a certain penalty paid in time as the physical cassette bearing the message is transported from the sender to the recipient.

There is therefore a need for an video messaging system equally usable within the business community and by individuals which provides full motion viewing of images, is attractive in cost, and more rapid in delivery than physical delivery of a video cassette or other physical copy techniques.

### Solution

The above problems are solved and an advance is made over the prior art in accordance with my invention wherein video signals are transformed from analog to digital signals and transmitted over conventional voice/data communication channels to a receiving unit which reconverts signals to analog form.

My invention is implementable with existing technology and equipment and takes advantage of current data and voice transmission techniques.

According to my invention, a message recorded on a conventional video cassette, is played in a video cassette recorder (VCR) and a signal is generated in analog form. Alternatively, a video camera can be used to record and transmit the signal with no intermediate recording on a video cassette. The signal format is determined by the standard implemented in the video recording equipment. For example, in the U.S. the format standard is NTSC, while elsewhere PAL and SECAM are the standards for video equipment for analog signals. Likewise, video signals can be captured in digital format, which include nx64 digital and CCITT H.261, and encoded using the Motion Picture Experts Group standards, for example, MPEG1 or MPEG2.

The bandwidth of video signals and the cost of their transmission is a limiting factor in their transmission over conventional voice and data lines. Typically, analog video signals are provided at 45 Mbps or higher signal rates. A conventional telecommunications system in the United States has a T1 carrier signal capable of 1.544 Mbps through-put (its transmission rate) and is broken into 24 voice channels each having a transmission rate of 64 Kbps. The European standard E1 carrier signal has a transmission rate of 2.0 Mbps and is broken into 32 voice channels each having a transmission rate of 64 Kbps.

While a conventional analog signal is compatible with telecommunications signals, the encoding rate of the analog signal is too high for the channels and results in lack of clarity and smoothness of motion. This can be improved by converting the signal from analog to digital form according to one of the industry standards, for example the Motion Pictures Experts Group standard MPEG1 which provides for encoding at several rates, notably for the purpose of my invention, at 1.544 Mbps (T1 carrier rate).

My invention recognizes and takes advantage of the compatibility of digital video signals with conventional voice and data telecommunications channels and the unobvious delivery of those signals at a lower transmission rate within telecommunications channel capacities to fully transmit all data and reassemble the data in a storage medium for subsequent viewing. For brevity, hereafter, I will refer to contemporaneous transmission and viewing as synchronous communications and transmission followed by delayed viewing, as is the case with my invention, as asynchronous communications.

Assume for a moment that a five minute video signal is encoded using MPEG1 for transmission at the rate of 1.544 Mbps. A conventional telecommunications digital transmission rate (DS1 rate) for the U.S. is 1.544 Mbps. The time required to transmit the complete video segment would be 300 seconds utilizing a telecommunications digital channel (e.g. (5X60=300). With this example, communications could be synchronous, if desired. On the other hand, asynchronous communications may be more desirable with the benefits of doing so including using the telecommunications network during off peak hours to reduce costs or making communications more convenient for senders and receivers in widely differing time zones, or providing a report to a party not available at the time it is most convenient for the seller to send the video message.

Furthermore, my invention recognizes the need for and provides the flexibility to select transmission over either a digital channel or over a voice channel. A conventional U.S. telecommunications voice channel has a transmission rate of 64 Kbps. Using a voice channel, the time required to transmit the complete five minute video segment in the above example would take 7200 seconds or 120 minutes. By using a 384 Kbps (Kilobits per second) channel the same video segment can be transmitted in 1200 seconds or 20 minutes. While the digital transmission rate is compatible with the selected MPEG1 encoding rate of 1.544 Mbps, the voice transmission rate is far too slow. But this has little relevance in my invention inasmuch as the speed of transmission is not critical, the completeness of transmission is what is desired so that images can be fully reassembled and motion can be clear and smooth when viewed.

Once the video data is transmitted the telecommunications system treats it as any other voice or data transmission. Conventional store and forward techniques and data communication protocols, e.g., frame relay and asynchronous transfer mode (ATM) are employed to manage the data signal through to the desired destination.

Data storage upon receipt is accomplished with a server, a data processing and storage medium such as a conventional computer with appropriate memory capacity. Between initial storage and viewing, the digital signal is converted back to analog form to allow it to be compatible with conventional video equipment such as a VCR or television set.

My invention has many applications. For example, a kiosk transmission unit capable of converting video signals from analog to video format and vice versa could be used to send and record a video segment for later viewing. This could produce a service industry similar to the old telegram delivery service. A sender would go to the kiosk in a nearby shopping mall or other video messaging service provider for transmission. The receiving message service provider would record the message on a video cassette for the intended recipient who would pick it up or have it delivered to him. Another application would be to distribute movies on video cassettes. A movie maker in India or Japan could quickly distribute the movie by sending it in data form to distributors in the U.S., Europe and elsewhere. With the data, the distributor could make copies in video cassette form in sufficient quantities to satisfy the local market demand. This circumvents the delay delivery of copies in cassette form necessitates and avoids pilfering of copies in transit. With a server available, a video feature consumer could dispense with physical media such as a video cassette or video disk, and could receive video segments, full length movies or otherwise, direct in the home and store them on the server for later viewing. A still further application would be a video equivalent of e-mail by which business personnel could take advantage of dedicated servers to send video messages during off-peak hours as a cost savings measure or to provide more information in long distance exchanges of information where the number of time zones crossed make it unattractive to attempt synchronous communications but more than written communication is desired. Yet another example of my invention would be an international video message delivery achieved by the servers being equipped with format conversion capability, by which data received is manipulated into the video format standard implemented in the receiving video equipment. Thus, the sending and receiving of the message becomes seamless, neither the sender nor the recipient concerned whether their video equipment implements the appropriate NTSC, PAL or SECAM standard. Thus the recipient avoids additional delays to convert the video segment to the local video format standard.

In accordance with one aspect of my invention, an asynchronous video communications system is provided which offers full motion viewing capability.

In accordance with another aspect of my invention, analog video signals are converted by a server to digital signals to make video segment transmission more efficient.

In accordance with another aspect of my invention, video data in digital form is transmitted at a rate compatible with one or more telecommunications transmission channels.

In accordance with another aspect of my invention, video data is stored prior to delivery to the receiving video system.

In accordance with another aspect of my invention, video data is reformatted to the video format standard of the receiving video system.

### Brief Description of the Drawing

Fig. 1 illustrates a video messaging system in accordance with an embodiment of the present invention.

Fig. 2 is a block diagram of a sending/receiving station as referenced in Fig. 1.

### Detailed Description

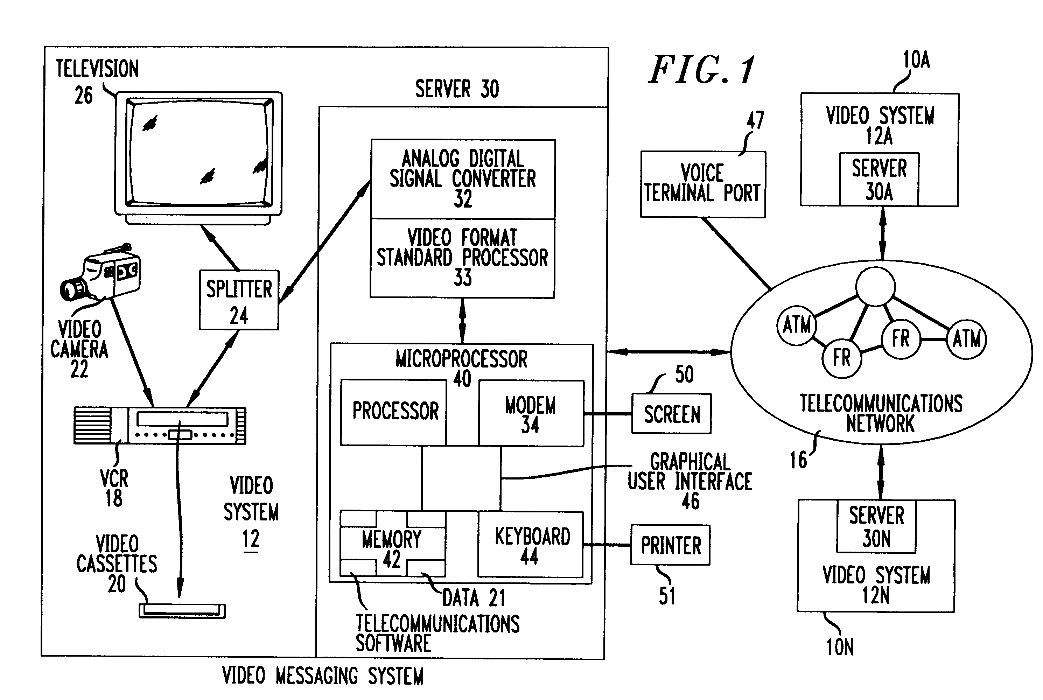

Fig. 1 illustrates a video messaging system 10 in accordance with the present invention in which a video system 12 is connected through a server 30 into a conventional telecommunications network 16. Other video messaging systems 10n, also containing video systems 12a-n and servers 30n, are connected to the telecommunications network as receiving stations for messages from video messaging system 10 or as sending stations to video messaging system 10 and/or other one another. While purpose built units could integrate various components subsequently described, the preferred embodiment is described in terms of conventional componentry to illustrate assembly and implementation of my invention using available products.

In the preferred embodiment, each video system 12 incorporates a video cassette recorder (VCR) 18 capable of playing video cassettes 20. The recorder also incorporates a feed location to which signals from a video camera 22 can be given. The video signal 21 in analog form is received by the VCR 18 from the camera 22 or the video cassette 20 and fed to a splitter 24 which sends video signal 21 to television 26 and server 30. Thus, if desired, the video message resident on video cassette 20 or provided by video camera 22 can be viewed in conjunction with out-processing by the sender. The television need not be activated during out-processing.

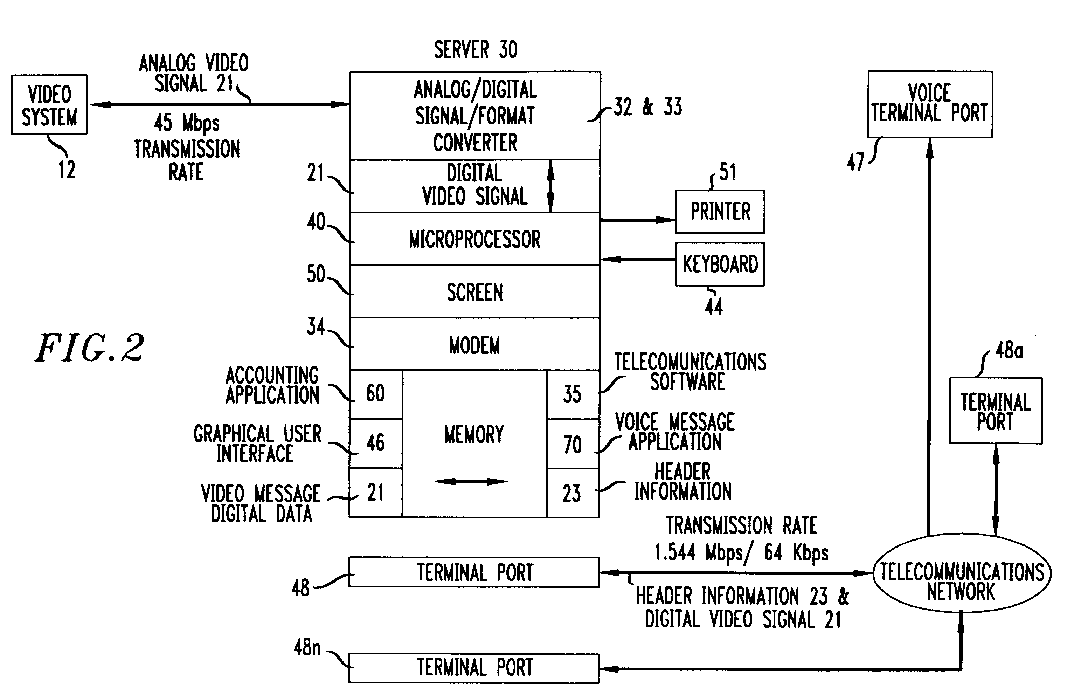

During out-processing, video signal 21 in analog form is sent to server 30. As shown in Fig. 2, server 30 is comprised of a analog/digital signal converter 32 which converts signal 21 from analog to digital form and a personal computer or similar microprocessor 40. As subsequently described under in-processing, a video format converter 33 also is part of server 30. In the case of the preferred embodiment, the digital form to which signal 21 is converted by converter 32 is MPEG1 encoded at 1.544 Mbps. The signal 21, now in digital form, is sent from converter 32 to microprocessor 40 where it is stored as data 21 in memory 42. Using keyboard 44, and telecommunications software 35, a sending caller activates modem 34 through a graphical user interface 46 which displays on screen 50 instructions and receiving destination information, control commands and other initiating, call process progress and call terminating information appropriate for the caller to properly initiate the call and monitor its progress during out-processing. As part of call initiation, the caller specifies one or more destination addresses using keyboard 44, and in the preferred embodiment, information identifying the sending and receiving callers and the message content. I refer to this identifying information as header information 23. Destination addresses are telephone numbers and/or other appropriate dialing information to correctly identify the intended receiving telecommunications port(s) to which the video message is to be directed.

Through graphical user interface 46 and telecommunications software 35, the sending caller causes modem 34 to initiate a call process into the telecommunications network 16. Once the call process is established by responses from the associated modem(s) 34 in the receiving server(s) 30, telecommunications software 35 accesses the video data 21 and header information 23 stored in memory 42 and transmits them into the telecommunications network 16 through modem 34. The rate of data transmission of video data 21 is controlled by telecommunications software 35 and modem 34.

As part of out-processing, in the preferred embodiment, call placement and completion information is recorded in memory 42 and subsequently accessed and organized, along with header information 23 by graphical user interface into a desired report format and sent to printer 51 which generates a call report.

By virtue of video signal conversion to digital form, the invention causes the telecommunications network 16 to treat the video message as its treats any other digital form of data transmission, such as facsimile transmissions and electronic mail transmissions. Consequently, all the current techniques utilized in data transmissions by telecommunications systems benefit the video data transmission. Such techniques include data communication protocols such as frame relay, asynchronous transfer mode (ATM) and switched multi-megabyte data services (SMPS) and store and forward techniques used to deliver the data from one server node in the telecommunications network 16 to the next subsequent node.

During in-processing, at the receiving telecommunications port(s), server modem(s) 34 will, upon activation, signal microprocessor 40 through telecommunications software 35, of an incoming data transmission. Microprocessor 40 will allocate memory 42 and subsequently store the incoming video message 21 received through modem 34 and contemporaneously receive and record the header information 23 along with other information related to the receiving event in a fashion such that the recorded video message 21, header information 23 and receiving event information are identified with one another.

During in-processing, the graphical user interface 46 displays on screen 50, or through printout generated by printer 51, the receipt of a video message. Depending upon the desires of the receiving caller, the server 30 automatically continues and completes in-processing of the video message. Alternatively, the server is controlled through the phases of in-processing in a step-wise fashion by commands entered at keyboard 44 by the recipient user consistent with the direction provided by the graphical user interface 46 on screen 50.

Following message and header information receipt and storage in memory 42, and upon initiation to continue, microprocessor 40 accesses the header information 23, the receiving information and the video message 21 stored in memory 42. Header information 23 and receiving information is displayed on screen 50 using graphical user interface 46. The video message in digital signal form 21 is sent to converter 32 which converts it to analog signal form, and sends it to video format converter 33 which converts the video message to the proper format for the resident video system 12.

In the preferred embodiment, an invoicing application 60 is resident on the microprocessor 40 which utilizes the header information 23 in conjunction with specified billing information and report forms to produce an account summary of the transmission, and generate both a label and an invoice report. The label and invoice report are sent to printer 51 which produces the associated label in the desired form and the invoice report. In the preferred embodiment, the microprocessor 40, utilizing the header information 23 and a voice message application 70, initiates a call to the identified recipient's voice terminal port 47 and provides an artificial voice message advising that the server 30 has received a video message for the recipient.

Returning to the video transmission process, the server 30 streams the video signal at the appropriate analog video signal rate, now in analog form and proper format, to the VCR 18 which displays the video message on television 26 and/or records the message on an inserted video cassette 20. In the preferred embodiment, the transmission rate for video signals generation by server 30 is selectively controllable to increase the speed of transmission to greater than normal for video systems to reduce the time necessary to record the message on cassette 20.

In the preferred embodiment, the video cassette 20 now carrying the recorded video message is matched with the printed label and invoice for identification, physical delivery and to solicit payment or memorialize cost. If the video message was only displayed on television 26 rather than recorded on cassette 20, the invoice and label are used to bill or advise cost. Either the sender or recipient may be sent the invoice and invoicing can take place as part of out-processing rather than, or as well as part of in-processing.

As can been seen from the above description, this apparatus is for the most part based on conventional video, microprocessor and telecommunications equipment combined in a new and unobvious way, to produce a messaging capability heretofore unavailable, meeting a readily identified need. As can be readily understood, certain aspects of the preferred embodiment need not be present to satisfy the basic functionality of the invention. Notably, the billing capability and recipient noticing capability are not essential to the practice of the invention. Further, while the invention has been described in the context of existing video, microprocessor and telecommunications equipment it can be appreciated that an integration of some or all of the devices could result in a more seamless delivery of video messages without the degree of participation described for callers and recipients. Further, it is appreciated that the recording medium used for video messages can easily be something other than magnetic tape, for example, magnetic discs or video discs could likewise be accommodated with appropriate adjustment of playing and recording equipment.

Thus it is to be understood that the above description is only of one preferred embodiment of the invention. Numerous other arrangements may be devised by one skilled in the art without departing from the scope of the invention. The invention is thus limited only as defined in the accompanying claims.

## Claims

1. An asynchronous video messaging system for sending video messages from a sender to one or more desired recipients using a conventional telecommunications channel comprising:
means for receiving a video signal in analog form, representing a video message, at a rate compatible with video transmission rates;
means for converting received video signals from analog to digital form;
means for directing digital video signals to desired recipients;
means for providing digital video signals to a telecommunications channel at a rate compatible with the transmission rate of the channel;
means for receiving digital video signals from the telecommunications channel;
means for storing video signals;
means for converting stored digital video signals to analog form; and
means for delivering analog video signals at a rate compatible with video transmission rates to a video display or video recording medium.

2. The system of claim 1 including means for identifying the sender and the desired recipient to the means for receiving the digital video signal.

3. The system of claim 2 including means for providing a brief description of the content of a video message.

4. The system of claim 3 including means for associating a video message with the means for identifying the sender and the desired recipient.

5. The system of claim 4 including means for providing information pertaining to the sender, the recipient and the content of a video message in conjunction with the video message across the telecommunications channel.

6. The system of claim 5 including means for discriminating between a received video message and the information pertaining to the sender, the recipient and the content of the video message sent in conjunction with the video message across the telecommunications channel.

7. The system of claim 6 including means for alerting the recipient to a received message.

8. The system of claim 1 in which the means for receiving a video signal in analog form comprises memory in a microprocessor.

9. The system of claim 1 in which the means for converting the video signals from analog to digital form comprises an analog/digital converter;

10. The system of claim 1 in which the means for directing the digital video signal to the desired recipients comprises:
a microprocessor with telecommunications software and graphical user interface software resident thereon and having a screen and keyboard for displaying information and inputting commands and dialing instructions; and
a modem connected between the microprocessor and the telecommunications channel;

11. The system of claim 1 in which the means for storing a video message in digital form is memory in a microprocessor.

12. The system of claim 1 in which the means for providing a video message in digital form to a telecommunications channel at a rate compatible with the telecommunications channel comprises:
a processor having telecommunications software resident thereon; and
a modem connected between the processor and the telecommunications channel.

13. An asynchronous video messaging system for use with a conventional telecommunications network comprising:
a converter for converting video signals from analog form to digital form and from digital form to analog form;
a processor having sufficient memory to store video messages in digital form of a desired length;
a device for entering dialing information and header information, header information comprising information relevant to the sender, the recipient and a description of the video message;
means for associating the header information with the stored video message and for sending the header information with the digital video signals into the telecommunications network;
means for discriminating between the header information and the video message received from the telecommunications network;
telecommunications software;
a modem; and
means for delivering signals from the converter to the memory and for delivering signals from the memory to the converter.

14. The asynchronous video messaging system of claim 13 in which telecommunications software comprises the means for controlling the rate of transmission of the digital signals from memory to the modem and by the modem to the telecommunications network.

15. The asynchronous video messaging system of claim 14 wherein a microprocessor associates the header information with the stored video message and sends the header information with the digital video signals into the telecommunications network.

16. The asynchronous video messaging system of claim 15 in which the means for delivering signals from the converter to the memory and for delivering signals from the memory to the converter is a communications line.

17. The asynchronous video messaging system of claim 16 further comprising a video system having a video cassette recorder, a television, a video camera, and at least one video cassette.

18. The asynchronous video messaging system of claim 17 including a means for identifying the receipt of a video message from a telecommunications channel.

19. The asynchronous video messaging system of claim 18 including:
a monitor; and
means for displaying header information and other information and instructions to the sender or the recipient.

20. The asynchronous video messaging system of claim 19 in which the means for displaying header information and other information and instructions comprises a graphical user interface.

21. The asynchronous video messaging system of claim 12 including a converter which converts video signals from analog form to digital form and digital form to analog form.

22. The asynchronous video messaging system of claim 20 including voice messaging software whereby a verbal notice of a received call is provided over a voice channel in a telecommunications network advising that a video message has been received.
